(19) Europäisches Patentamt
European Patent Office
Office européen des brevets

(11) Veröffentlichungsnummer: **0 060 474**
**A1**

(12) # EUROPÄISCHE PATENTANMELDUNG

(21) Anmeldenummer: **82101806.6**

(22) Anmeldetag: **08.03.82**

(51) Int. Cl.³: **C 07 F 9/24**, C 07 F 9/44, A 01 N 57/26

(30) Priorität: **18.03.81 DE 3110595**

(43) Veröffentlichungstag der Anmeldung: **22.09.82 Patentblatt 82/38**

(84) Benannte Vertragsstaaten: **AT BE CH DE FR GB IT LI NL SE**

(71) Anmelder: **BAYER AG, Zentralbereich Patente, Marken und Lizenzen, D-5090 Leverkusen 1, Bayerwerk (DE)**

(72) Erfinder: **Arlt, Dieter, Prof. Dr., Rybniker Strasse 2, D-5000 Koeln 80 (DE)**
Erfinder: **Homeyer, Bernhard, Dr., Obere Strasse 28, D-5090 Leverkusen 3 (DE)**
Erfinder: **Hammann, Ingeborg, Dr., Belfortstrasse 9, D-5000 Koeln 1 (DE)**
Erfinder: **Paul, Volker, Dr., Ahornstrasse 5, D-5650 Solingen (DE)**

(54) **Phosphor(phosphon)-säureesteramide, ihre Herstellung und Verwendung.**

(57) Die Erfindung betrifft neue Phosphor(phosphon)-säureesteramide der Formel I

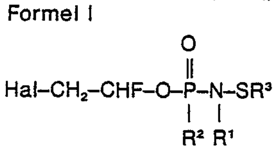 (I)

in welcher

$R^1$ für Wasserstoff oder gegebenenfalls substituiertes Alkyl

$R^2$ für gegebenenfalls substituiertes Alkyl oder gegebenenfalls substituiertes Alkoxy

$R^3$ für gegebenenfalls substituiertes Alkyl oder gegebenenfalls substituiertes Aryl und

Hal für Halogen stehen,

welche durch die Umsetzung von Phosphor(phosphon)-säureesteramiden der Formel II

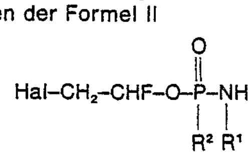 (II)

in welcher

$R^1$, $R^2$ und Hal die oben angegebene Bedeutung haben, mit Sulfenchloriden der Formel

$$ClSR^3 \quad (III)$$

in welcher

$R^3$ die oben angegebene Bedeutung besitzt, in Gegenwart eines Säureakzeptors und gegebenenfalls in Gegenwart eines Lösungsmittels erhalten werden, und welche als Schädlingsbekämpfungsmittel (Insektizide, Akarizide, Nematizide, Fungizide) verwendet werden können.

EP 0 060 474 A1

BAYER AKTIENGESELLSCHAFT 5090 Leverkusen, Bayerwerk

Zentralbereich
Patente, Marken und Lizenzen S/Kü-c
Ia

# Phosphor(phosphon)-säureesteramide, ihre Herstellung und Verwendung

Die Erfindung betrifft neue O-(1-Fluor-2-halogen-ethyl)-phosphor-(phosphon)-säure-esteramide, ein Verfahren zu ihrer Herstellung, sie enthaltende Schädlingsbekämpfungsmittel, ihre Herstellung und Verwendung als Schädlingsbekämpfungsmittel, welche insektizide und nematizide aber auch fungizide Eigenschaften besitzen.

Es ist bereits aus der DE-Offenlegungsschrift 2 629 016 bekannt geworden, daß bestimmte Phosphor-(phosphon)-esteramide insektizide, akarizide und nematizide Eigenschaften besitzen. Diese Verbindungen sind jedoch unter bestimmten Anwendungsbedingungen nicht immer voll befriedigend.

Es wurden nun neue Phosphor(phosphon)-säureesteramide der Formel I

$$\text{Hal} - CH_2 - CHF - O - \underset{R^2}{\overset{O}{\overset{\|}{P}}} - \underset{R^1}{N} - SR^3 \qquad \text{(I)}$$

gefunden, in welcher

$R^1$ für Wasserstoff oder gegebenenfalls substituiertes Alkyl

$R^2$ für gegebenenfalls substituiertes Alkyl oder gegebenenfalls substituiertes Alkoxy

$R^3$ für gegebenenfalls substituiertes Alkyl oder gegebenenfalls substituiertes Aryl und

Hal für Halogen stehen.

Weiterhin wurde gefunden, daß die neuen Verbindungen der Formel I erhalten werden, wenn man Phosphor(phosphon)-säureesteramide der Formel II

$$\text{Hal} - CH_2 - CHF - O - \underset{\underset{R^2}{|}}{\overset{\overset{O}{\|}}{P}} - \underset{\underset{R^1}{|}}{NH} \qquad \text{(II)}$$

in welcher

$R^1$, $R^2$ und Hal die oben angegebene Bedeutung haben,

mit Sulfenchloriden der Formel III

$$ClSR^3 \qquad \text{(III)}$$

in welcher

$R^3$ die oben angegebene Bedeutung besitzt, in Gegenwart eines Säureakzeptors und gegebenenfalls in Gegenwart eines Lösungsmittels umsetzt.

Die neuen Verbindungen der Formel I sind überraschenderweise gegenüber den bereits bekannten entsprechenden Verbindungen insbesondere durch eine geringe Warmblütertoxizität und insbesondere durch eine spezifische Wirksamkeit als systemisches Bodeninsektizid von hoher Wirkdauer ausgezeichnet. Außerdem besitzen die erfindungsgemäßen Verbindungen eine sehr gute Pflanzenverträglichkeit und sind darüber hinaus fungizid wirksam.

Im gegebenenfalls substituierten Alkyl $R^1$, $R^2$ und $R^3$ steht Alkyl für geradkettiges oder verzweigtes Alkyl mit vorzugsweise 1 bis 6, insbesondere 1 bis 4 Kohlenstoffatomen. Beispielhaft seien gegebenenfalls substituiertes Methyl, Ethyl, n.- und i.-Propyl, n.-, i-, s- und t.-Butyl, genannt.

Im gegebenfalls substituierten Alkoxy $R^2$ steht Alkoxy für geradkettiges oder verzweigtes Alkoxy mit vorzugsweise 1 bis 6, insbesondere 1 bis 4 Kohlenstoffatomen. Beispielhaft seien gegebenenfalls substituiertes Methoxy, Ethoxy, n.- und i.-Propoxy und n.-, i.-, s.- und t.-Butoxy genannt.

Die Alkylreste $R^1$, $R^2$ und $R^3$ sowie der Alkoxyrest $R^2$ können einen oder mehrere, vorzugsweise 1 bis 3, insbesondere 1 oder 2 gleiche oder verschiedene Substituenten tragen. Als Substituenten seien beispielhaft aufgeführt:

Alkoxy mit vorzugsweise 1 bis 4, insbesondere 1 oder 2 Kohlenstoffatomen, wie Methoxy, Ethoxy, n.- und i.-Propyloxy und n.-, i.- und t.-Butyloxy; Alkylthio mit vorzugsweise 1 bis 4, insbesondere 1 oder 2 Kohlenstoffatomen, wie Methylthio, Ethylthio, n.- und i.-Propylthio und n.-, i.- und t.-Butylthio; Halogen, vorzugsweise Fluor, Chlor, Brom und Jod, insbesondere Chlor und Brom sowie Cyano.

Als substituiertes Alkyl $R^1$ und $R^3$ und Alkoxy $R^2$ seien besonders durch Halogen substituiertes Alkyl (Halogenalkyl) und Alkoxy (Halogenalkoxy) erwähnt. Halogenalkyl $R^3$ enthält vorzugsweise 1 bis 4, insbesondere 1 oder 2 Kohlenstoffatome und vorzugsweise 1 bis 5, insbesondere 1 bis 3 gleiche oder verschiedene Halogenatome, wie Fluor, Chlor, Brom und Jod, vorzugsweise Fluor und/oder Chlor.

Als Halogen Hal steht vorzugsweise Fluor, Chlor, Brom und Jod, insbesondere Chlor und Brom.

Als gegebenenfalls substituiertes Aryl $R^3$ steht Aryl mit vorzugsweise 6 oder 10 Kohlenstoffatomen im Arylteil. Beispielhaft seien gegebenenfalls substituiertes Phenyl oder Naphthyl, insbesondere Phenyl genannt.

Der Arylrest $R^3$ kann einen oder mehrere, vorzugsweise 1 bis 3, insbesondere 1 oder 2 gleiche oder verschiedene Substituenten tragen. Als Substituenten seien beispielhaft aufgeführt:

Alkyl mit vorzugsweise 1 bis 4, insbesondere 1 oder 2 Kohlenstoffatomen, wie Methyl, Ethyl, n.- und i.-Propyl und n.-, i.- und t.-Butyl; Alkoxy mit vorzugsweise 1 bis 4, insbesondere 1 oder 2 Kohlenstoffatomen, wie Methoxy, Ethoxy, n.- und i.-Propyloxy und n.-, i.- und t.-Butyloxy; Alkylthio mit vorzugsweise 1 bis 4, insbesondere 1 oder 2 Kohlenstoffatomen, wie Methylthio, Ethylthio, n.- und i.-Propylthio und n.-, i.- und t.-Butylthio; Halogenalkyl mit vorzugsweise 1 bis 4, insbesondere 1 oder 2 Kohlenstoffatomen und vorzugsweise 1 bis 5, insbesondere 1 bis 3 Halogenatomen, wobei die Halogenatome gleich oder verschieden sind und als Halogenatome, vorzugsweise Fluor, Chlor oder Brom, insbesondere Fluor stehen, wie Trifluormethyl; Halogen, vorzugsweise Fluor, Chlor, Brom und Jod, insbesondere Chlor und Brom; Cyano oder Nitro. Besonders sei Phenyl genannt, welches durch 1 bis 3 Fluor-, Chlor- oder Bromatome, vorzugsweise Chlor- oder Fluoratome substituiert ist (Halogenphenyl).

Bevorzugt sind Verbindungen der Formel I, in welchen

$R^1$ für Wasserstoff oder Alkyl,

$R^2$ für Alkyl oder Alkoxy,

$R^3$ für Alkyl, Halogenalkyl, Halogenphenyl und

Hal für Chlor oder Brom stehen.

Besonders bevorzugt sind Verbindungen der Formel I, in welchen

$R^1$ für Wasserstoff oder $C_{1-4}$-Alkyl,

$R^2$ für $C_{1-4}$-Alkyl oder $C_{1-4}$-Alkoxy,

$R^3$ für $C_{1-4}$-Alkyl, $C_{1-4}$-Halogenalkyl oder Halogenphenyl und

Hal für Chlor oder Brom stehen.

Ganz besonders bevorzugt sind Verbindungen der Formel (I), in welchen

$R^1$ für Wasserstoff, Methyl, Ethyl, i- und n-Propyl, 1-Chlorisopropyl und sec.-Butyl,

$R^2$ $C_{1-4}$-Alkyl und $C_{1-4}$-Alkoxy

$R^3$ für $CCl_3$-, $CFCl_2$, $CF_3$, Phenyl oder o-, m- oder p-Chlorphenyl steht.

Verwendet man beispielsweise O-(1-Fluor-2-chlor-ethyl)-O-methyl-phosphorsäure-diester-N-ethyl-amid und Dichlorfluormethansulfenylchlorid als Ausgangsstoffe, so kann die Reaktion dieser Verbindungen durch das folgende Formelschema skizziert werden:

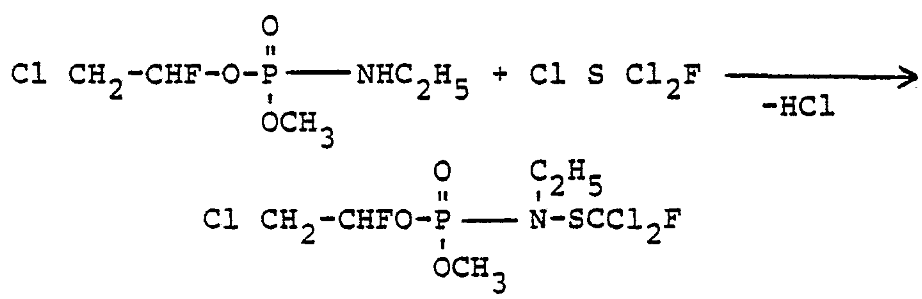


Die als Ausgangsstoffe dienenden O-(1-Fluor-2-halogen-ethyl)-phosphor-(phosphon)-säureesteramide sind bekannt bzw. in üblicher Weise nach bekannten Verfahren herstellbar.

Als Beispiele dieser Ausgangsstoffe seien genannt Methan- und Ethan-O-(1-fluor-2-chlor-ethyl)-phosphonesteramid, Methan- und Ethan-O-(1-fluor-2-brom-ethyl)-phosphonesteramid und deren N-alkylderivate mit 1 bis 4 Kohlenstoffatomen, weiterhin

O-(1-Fluor-2-chlor-ethyl)-O-methyl-phosphorsäure-diester-amid,
O-(1-Fluor-2-chlor-ethyl)-O-methyl-phosphorsäure-diester-N-ethyl-amid,
O-(1-Fluor-2-chlor-ethyl)-O-methyl-phosphorsäure-diester-N-methyl-amid,
O-(1-Fluor-2-chlor-ethyl)-O-methyl-phosphorsäure-diester-N-i-propyl-amid,
O-(1-Fluor-2-chlor-ethyl)-O-methyl-phosphorsäure-diester-N-n-propyl-amid,
O-(1-Fluor-2-chlor-ethyl)-O-methyl-phosphorsäure-diester-N-sec.butyl-amid,

O-(1-Fluor-2-chlor-ethyl)-O-ethyl-phosphorsäure-diester-amid,
O-(1-Fluor-2-chlor-ethyl)-O-ethyl-phosphorsäure-diester-N-ethyl-amid,
O-(1-Fluor-2-chlor-ethyl)-O-ethyl-phosphorsäure-diester-N-methyl-amid,
O-(1-Fluor-2-chlor-ethyl)-O-ethyl-phosphorsäure-diester-N-i-propyl-amid,
O-(1-Fluor-2-chlor-ethyl)-O-ethyl-phosphorsäure-diester-N-n-propyl-amid,
O-(1-Fluor-2-chlor-ethyl)-O-ethyl-phosphorsäure-diester-N-sec.butyl-amid,

O-(1-Fluor-2-chlor-ethyl)-O-i-o.n-propyl-phosphorsäure-diester-amid,
O-(1-Fluor-2-chlor-ethyl)-O-i.o.n-propyl-phosphorsäure-diester-N-ethyl-amid,

O-(1-Fluor-2-chlor-ethyl)-O-i.o.n-propyl-phosphorsäure-diester-N-methyl-amid,
O-(1-Fluor-2-chlor-ethyl)-O-i.o.n-propyl-phosphorsäure-diester-N-i-propyl-amid,
O-(1-Fluor-2-chlor-ethyl)-O-i.o.n-propyl-phosphorsäure-diester-N-n-propyl-amid,
O-(1-Fluor-2-chlor-ethyl)-O-i.o.n-propyl-phosphorsäure-diester-N-sec.butyl-amid,

O-(1-Fluor-2-brom-ethyl)-O-methyl-phosphorsäure-diester-amid,
O-(1-Fluor-2-brom-ethyl)-O-methyl-phosphorsäure-diester-N-ethyl-amid,
O-(1-Fluor-2-brom-ethyl)-O-methyl-phosphorsäure-diester-N-methyl-amid,
O-(1-Fluor-2-brom-ethyl)-O-methyl-phorphorsäure-diester-N-i-propyl-amid,
O-(1-Fluor-2-brom-ethyl)-O-methyl-phosphorsäure-diester-N-n-propyl-amid,
O-(1-Fluor-2-brom-ethyl)-O-methyl-phosphorsäure-diester-N-sec.butyl-amid,

O-(1-Fluor-2-brom-methyl)-O-ethyl-phosphorsäure-diester-N-amid,
O-(1-Fluor-2-brom-ethyl)-O-ethyl-phosphorsäure-N-ethyl-amid,
O-(1-Fluor-2-brom-ethyl)-O-ethyl-phosphorsäure-N-methyl-amid,
O-(1-Fluor-2-brom-ethyl)-O-ethyl-phosphorsäure-diester-N-i-propyl-amid,
O-(1-Fluor-2-brom-ethyl)-O-ethyl-phosphorsäure-diester-N-n-propyl-amid,

O-(1-Fluor-2-brom-ethyl)-O-ethyl-phosphorsäure-diester-N-sec.butyl-amid,
O-(1-Fluor-2-brom-ethyl)-O-ethyl-phosphorsäure-diester-N-chlor-isopropyl-amid.

Die Umsetzung der genannten Ausgangsstoffe der Formeln II und III zu den erfindungsgemäßen Verbindungen der Formel I wird bevorzugt unter Mitverwendung geeigneter Lösungs- und Verdünnungsmittel durchgeführt. Als solche kommen praktisch alle inerten organischen Solventinen in Frage. Hierzu gehören insbesondere aliphatische und aromatische, gegebenenfalls chlorierte Kohlenwasserstoffe, wie Benzol, Toluol, Xylol, Benzin, Methylenchlorid, Chloroform, Tetrachlorkohlenstoff, Chlorbenzol, oder Ether, z.B. Diethyl- und Dibutyläther, Dioxan, ferner Ketone, beispielsweise Aceton, Methylethyl-, Methylisopropyl- und Methylisobutylketon, außerdem Nitrile, wie Aceto- und Propionnitril.

Als Säureakzeptoren können alle üblichen Säurebindemittel Verwendung finden. Besonders bewährt haben sich tertiäre Amine wie Trimethylamin, Triethylamin, Dimethylanilin, Dimethylbenzylamin und Pyridin, ferner Alkalicarbonate wie Natrium- und Kaliumcarbonat.

Die Reaktionstemperatur kann innerhalb eines größeren Bereichs variiert werden. Im allgemeinen arbeitet man zwischen 0 und 100°C, vorzugsweise bei 20 bis 40°C. Die Umsetzung läßt man im allgemeinen bei Normaldruck ablaufen.

Man setzt die Reaktionsteilnehmer vorzugsweise im äquimolaren Verhältnis ein. Ein Überschuß der einen oder anderen Komponente bringt keine wesentlichen Vorteile. Die Reaktion wird vorzugsweise in einem der angegebenen Lösungsmittel in Gegenwart eines Säureakzeptors durchgeführt. Die Aufarbeitung des Ansatzes erfolgt nach üblichen Methoden durch Filtration, Waschen des Filtrats und Abdestillieren des Lösungsmittels.

Die neuen Verbindungen werden in Form von Ölen erhalten, die sich nicht unzersetzt destillieren lassen, jedoch durch sogenanntes "Andestillieren", d.h. längeres Erhitzen unter vermindertem Druck auf mäßig erhöhte Temperaturen von den letzten flüchtigen Anteilen befreit und auf diese Weise gereinigt werden können. Zu ihrer Charakterisierung kann der Brechungsindex dienen.

Die Wirkstoffe eignen sich bei guter Pflanzenverträglichkeit und günstiger Wamblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp.,Phorodon humuli, Rhopalosiphum padi, Empoasca spp., Euscelis bilobatus,

Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp. Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe weisen weiterhin eine starke mikrobizide, insbesondere fungizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Als bekämpfbare Mikroorganismen seien beispielsweise genannt: Fusarium nivale, Rhizoctomia solani, Cochliobolus miyabeanus, Botrytis cinera, Pyricularia oryzae, Helminthosporium gramineum, Phytophtora cactorum, Phythium ultimum und Pelicularia saskii.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims,

Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo - und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

0060474

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 100 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Wirksamkeit der erfindungsgemäßen Verbindungen soll anhand der folgenden Beispiele erläutert werden, wobei teilweise mit den aus der DE-Offenlegungsschrift 2 629 016 bekannten O-(1-Fluor-2-bromethyl)-O-ethyl-phosphorsäure-diester-N-ethylamid ("Vergleichsverbindung A") und O-(1-Fluor-2-chlorethyl)-O-ethyl-phosphorsäure-diester-N-methylamid ("Vergleichsverbindung B") verglichen wurde.

Beispiel A

Grenzkonzentrations-Test / Bodeninsekten

| | | | |
|---|---|---|---|
| Testinsekt: | Phorbia antiqua-Maden | | (im Boden) |
| Lösungsmittel: | 3 | Gewichtsteile | Aceton |
| Emulgator: | 1 | Gewichtsteil | Alkylarylpolyglykoläther |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm ( = mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

In einem Test bei einer Konzentration von 1,25 ppm zeigte die "Vergleichsverbindung A" keine Wirkung (0 %), während die Verbindungen der Beispiele 1, 2, 3 und 4 einen Abtötungsgrad von 100 % zeigten.

Beispiel B

Grenzkonzentrations-Test / Wurzelsystemische Wirkung

Testinsekt: Myzus persicae
Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (=mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

In diesem Test zeigten bei einer Konzentration von 1,25 ppm z.B. die Verbindungen der Beispiele 1, 2, 3 und 4 einen Abtötungsgrad von 100 %.

Beispiel C

Grenzkonzentrations-Test

Testnematode: Meloidogyne incognita
Lösungsmittel: 3 Gewichtsteile Aceton
Emulgator: 1 Gewichtsteil Alkylarylpolyglykoläther

Zur Herstellung einer zweckmäßiger Wirkstoffzubereitung vermischt man 1 Gewichtsteil Wirkstoff mit der angegebenen Menge Lösungsmittel, gibt die angegebene Menge Emulgator zur und verdünnt das Konzentrat mit Wasser auf die gewünschte Konzentration.

Die Wirkstoffzubereitung wird innig mit Boden vermischt, der mit den Testnematoden stark verseucht ist.Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27°C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

In einem Test bei 5 ppm zeigten z.B. die Verbindungen der Beispiele 1 und 2 einen Abtötungsgrad von 100 %.

Beispiel D

Drosophila-Test

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

1 $cm^3$ der Wirkstoffzubereitung wird auf eine Filterpapierscheibe (7 cm Durchmesser) aufpipettiert. Man legt diese naß auf die Öffnung eines Glasgefäßes, in dem sich 50 Taufliegen (Drosophila melanogaster) befinden und bedeckt es mit einer Glasplatte.

Nach der gewünschten Zeit bestimmt man die Abtötung in %. Dabei bedeutet 100 %, daß alle Fliegen abgetötet wurden; 0 % bedeutet, daß keine Fliegen abgetötet wurden.

In einem Test bei einer Konzentration von 0,001 % zeigten nach 1 Tag die Vergleichsverbindungen A und B keine Wirkung (0 %), während die Verbindungen der Beispiele 1, 3 und 4 einen Abtötungsgrad von 100 % zeigten.

Beispiel E

Tetranchus-Test (resistent)

Lösungsmittel: 3 Gewichtsteile Aceton
Emulgator: 1 Gewichtsteil Alkylarylpolyglykoläther

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaselus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Spinnmilben abgetötet wurden; 0 % bedeutet, daß keine Spinnmilben abgetötet wurden.

In diesem Test zeigte bei einer Konzentration von 0,1 % nach 2 Tagen die "Vergleichsverbindung A" einen Abtötungsgrad von 40 %, während die Verbindungen der Beispiele 1, 2, 3, 4 und 5 einen Abtötungsgrad von 100 % zeigten.

Beispiel F

Agarplattentest (antimikrobielle Wirkung)

Verwendeter Nährboden
39 Gewichtsteile Kartoffelglukose Agar
5 Gewichtsteile Agar-Agar
10 Gewichtsteile Pepton
5 Gewichtsteile Malz

werden in 1000 ml destilliertem Wasser gelöst und 30 Minuten bei 121°C autoklaviert.

Lösungsmittel: 2 Gewichtsteile Wasser
Mengenverhältnis von Lösungsmittel zu Nährboden: 2 : 100.

Zur Herstellung einer zweckmäßigen Wirkstoffzubereitung vermischt man 1 Gewichtsteil Wirkstoff mit der angegebenen Menge Lösungsmittel.

Das Konzentrat wird im genannten Mengenverhältnis mit dem flüssigen Nährboden gründlich vermischt und in Petrischalen gegossen.

Ist der Nährboden erkaltet und fest, werden die Platten mit folgenden Mikroorganismen beimpft und bei ca. 21°C inkubiert: Fusarium nivale, Rhizoctomia solani, Cochliobolus miyabenus, Botrytis cinerea, Pyricularia oryzae, Helminthosprium gramineum, Phytophthora cactorum, Pythium ultimum, Pelicularia sasakii.

Die Auswertung erfolgt je nach Wachstumsgeschwindigkeit der Mikroorganismen nach 2 bis 8 Tagen. Die Wachstumshemmung wird als Maß (mit Bewertungsziffern 1 - 10) für die Wirkung der Präparate herangezogen wird wobei die Bewertungsziffer 10 für keine Hemmung und die Bewertungsziffer 1 für eine sehr gute Hemmung steht.

In einem Test bei einer Wirkstoffkonzentration von 10 ppm z.B. mit Furarium nivale und Rhizoctonia solani ergab der bekannte fungizide Wirkstoff Zineb eine Bewertungsziffer 9, während beispielsweise die Verbindungen der Beispiele 1, 2, 3 und 4 die Bewertungsziffer 1 erhielten. Ähnlich günstige Ergebnisse wurden auch beim Einsatz der übrigen oben genannten Mikroben erzielt.

Die Herstellung der erfindungsgemäßen Verbindungen sei anhand der folgenden Beispiele erläutert:

Beispiel 1

$(Cl\ CH_2 - CHF\text{-}O)\ (OCH_3)\ PO\text{-}N\text{-}C_2H_5$
$S\text{-}CCl_2F$

In 150 ml Toluol werden 21,0 g O-(1-Fluor-2-chlor-ethyl)-O-methyl-phosphorsäure-diester-N-ethyl-amid und 20,0 g (0,12 m) Dichlorfluormethansulfenylchlorid gelöst. Unter Rühren werden bei 20° - 25°C 12,0 (0,12 m) Triethylamin zugetropft. Nach 5 Stunden wird das Reaktiosgemisch zweimal mit je 500 ml Wasser extrahiert, die organische Phase abgetrennt und mit Natriumsulfat getrocknet. Das Toluol wird im Rotationsverdampfer im Ölpumpenvakuum entfernt. Man erhält 29,5 g N-/O-(1-fluor-2-chlor-ethyl)-O-methyl-phosphoryl/-N-ethyl-dichlorfluormethan-sulfenamid, $n_D^{20}$ :1,4879.

Beispiel 2

$(Br\ CH_2 - CHFO)\ (OC_2H_5)\ PO\text{-}N\text{-}C_2H_5$
$SCCl_2F$

In 150 ml Toluol werden 27,8 g (0,1 m) O-(1-Fluor-2-brom-ethyl)-O-ethyl-phosphorsäurediester-N-ethyl-amid und 20,0 g (0,12 m) Dichlorfluormethansulfenylchlorid gelöst. Unter Rühren werden bei 20° - 25°C 12,0 g (0,12 m) Triethylamin zugetropft. Nach 5 Stunden wird

das Reaktionsgemisch zweimal mit je 500 ml Wasser extrahiert, die organische Phase abgetrennt und mit Natriumsulfat getrocknet. Das Toluol wird im Rotationsverdampfer im Ölpumpenvakuum entfernt. Man erhält 37,5 g N-[O-(1-fluor-2-brom-ethyl)-O-ethyl-phosphoryl]-N-ethyl-dichlorfluor-methansulfenamid, $n_D^{20}$: 1,4895.

<u>Beispiel 3 - 6</u>

In analoger Weise wie in Beispiel 1 oder 2 beschrieben wurden folgende Verbindungen synthetisiert und durch ihren Brechungsindex charakterisiert:

| | | |
|---|---|---|
| 3 | $(ClCH_2-CHF-O)(OC_2H_5)PO-N-C_2H_5$<br>$\quad\quad SCCl_2F$ (an N) | $n_D^{20}$: 1,4725 |
| 4 | $(ClCH_2-CHF-O)(OC_2H_5)PO-N-CH_3$<br>$\quad\quad SCCl_2F$ (an N) | $n_D^{20}$: 1,4739 |
| 5 | $CH_3$ (an CH)<br>$(BrCH_2-CHF-O)(OC_2H_5)PO-N-CH-C_2H_5$<br>$\quad\quad SCCl_2F$ (an N) | $n_D^{20}$ : 1,4807 |
| 6 | $(ClCH_2-CHF-O)(OCH_3)PO-N-CH(CH_3)_2$<br>$\quad\quad SCCl_2F$ (an N) | $n_D^{20}$: 1.4718 |

Patentansprüche

1. Phosphor(phosphon)-säureesteramide der Formel I

$$Hal-CH_2-CHF-O-\overset{\overset{\large O}{\|}}{\underset{\underset{\large R^2}{|}}{P}}-\underset{\underset{\large R^1}{|}}{N}-SR^3 \qquad (I)$$

in welcher

$R^1$ für Wasserstoff oder gegebenenfalls substituiertes Alkyl

$R^2$ für gegebenenfalls substituiertes Alkyl oder gegebenenfalls substituiertes Alkoxy

$R^3$ für gegebenenfalls substituiertes Alkyl oder gegebenenfalls susbtituiertes Aryl und

Hal für Halogen stehen.

2. Phosphor(phosphon)-säureesteramide der Formel I gemäß Anspruch 1,

in welcher

$R^1$ für Wasserstoff oder Alkyl,

$R^2$ für Alkyl oder Alkoxy,

$R^3$ für Alkyl, Halogenalkyl, Halogenphenyl und

Hal für Chlor oder Brom stehen.

3. Phosphor(phosphon)-säureesteramide der Formel I gemäß Anspruch 1,

in welcher

$R^1$ für Wasserstoff oder $C_{1-4}$-Alkyl,

$R^2$ für $C_{1-4}$-Alkyl oder $C_{1-4}$-Alkoxy,

$R^3$ für $C_{1-4}$-Alkyl, $C_{1-4}$-Halogenalkyl oder Halogenphenyl und

Hal für Chlor oder Brom stehen.

4. Phosphor(phosphon)-säureesteramide der Formel I gemäß Anspruch 1,

in welcher

$R^1$ für Wasserstoff, Methyl, Ethyl, i- und n-Propyl, 1-Chlorisopropyl und sec-Butyl,

$R^2$ $C_{1-4}$-Alkyl und $C_{1-4}$-Alkoxy,

$R^3$ für $CCl_3$-, $CFCl_2$, $CF_3$, Phenyl oder o-, m- oder p-Chlorphenyl steht.

5. Verfahren zur Herstellung von Phosphor(phosphon)-säureesteramiden der Formel I

$$\text{Hal} - CH_2 - CHF - O - \underset{R^2}{\overset{O}{\overset{\|}{P}}} - \underset{R^1}{N} - SR^3 \qquad (I)$$

in welcher

$R^1$ für Wasserstoff oder gegebenenfalls substituiertes Alkyl

$R^2$ für gegebenenfalls substituiertes Alkyl oder gegebenenfalls substituiertes Alkoxy

$R^3$ für gegebenenfalls substituiertes Alkyl oder gegebenenfalls substituiertes Aryl und

Hal für Halogen stehen,

dadurch gekennzeichnet, daß man Phosphor(phosphon)-säureesteramide der Formel II

$$Hal - CH_2 - CHF - O - \underset{R^2}{\overset{O}{\overset{\|}{P}}} - \underset{R^1}{NH} \qquad (II)$$

in welcher

$R^1$, $R^2$ und Hal die oben angegebene Bedeutung haben,

mit Sulfenchloriden der Formel III

$$ClSR^3 \qquad (III)$$

in welcher

$R^3$ die oben angegebene Bedeutung besitzt,

in Gegenwart eines Säureakzeptors und gegebenenfalls in Gegenwart eines Lösungsmittels umsetzt.

6. Schädlingsbekämpfungsmittel, gekennzeichnet durch einen Gehalt an mindestens einem Phosphor(phosphon)-säureesteramid der Formel I.

7. Verwendung von Phosphor(phosphon)-säureesteramiden der Formel I zur Bekämpfung von Schädlingen, insbesondere Insekten, Spinnentieren und Nematoden sowie zur Behandlung von durch Mikroben hervorgerufenen Erkrankungen von Pflanzen oder Pflanzenteilen.

8. Verfahren zur Bekämpfung von Schädlingen, dadurch gekennzeichnet, daß man Phosphor(phosphon)-säureesteramide der Formel I auf die Schädlinge, vorzugsweise Insekten, Spinnentiere, Nematoden, Mikroben oder ihren Lebensraum einwirken läßt.

9. Verfahren zur Herstellung von Schädlingsbekämpfungsmitteln, dadurch gekennzeichnet, daß man Phosphor(phosphon)-säureesteramide der Formel I mit Streckmitteln und/oder oberflächenaktiven Mittel vermischt.

Europäisches Patentamt

0060474

# EUROPÄISCHER RECHERCHENBERICHT

Nummer der Anmeldung

EP 82 10 1806

| EINSCHLÄGIGE DOKUMENTE | | | KLASSIFIKATION DER ANMELDUNG (Int Cl.) |
|---|---|---|---|
| Kategorie | Kennzeichnung des Dokuments mit Angabe, soweit erforderlich, der maßgeblichen Teile | betrifft Anspruch | |
| D/Y | DE - A - 2 629 016 (BAYER A.G.)<br>* Patentansprüche *<br>-- | 1,6-9 | C 07 F 9/24<br>9/44<br>A 01 N 57/26 |
| Y | EP - A - 0 001 053 (BAYER A.G.)<br>* Patentansprüche *<br>-- | 1,6-9 | |
| Y | DE - B - 1 022 587 (NORDDEUTSCHE AFFINERIE)<br>* das ganze Dokument *<br>------ | 1,6-9 | |
| | | | RECHERCHIERTE SACHGEBIETE (Int. Cl.)<br>C 07 F 9/00 |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 18-05-1982 | BESLIER |